(19) Europäisches Patentamt
European Patent Office
Office européen des brevets

(11) Numéro de publication: **0 272 992 B1**

(12) **FASCICULE DE BREVET EUROPEEN**

(45) Date de publication de fascicule du brevet: **19.02.92** (51) Int. Cl.$^5$: **C08G 69/44**

(21) Numéro de dépôt: **87420327.6**

(22) Date de dépôt: **02.12.87**

(54) **Procédé pour l'obtention de copolyesters amides aromatiques thermotropes.**

(30) Priorité: **05.12.86 FR 8617248**

(43) Date de publication de la demande:
**29.06.88 Bulletin 88/26**

(45) Mention de la délivrance du brevet:
**19.02.92 Bulletin 92/08**

(84) Etats contractants désignés:
**AT BE CH DE ES FR GB IT LI LU NL SE**

(56) Documents cités:
**EP-A- 0 063 880**
**EP-A- 0 066 359**
**FR-A- 2 270 282**
**FR-A- 2 576 027**
**US-A- 4 182 842**

(73) Titulaire: **RHONE-POULENC CHIMIE**
**25, quai Paul Doumer**
**F-92408 Courbevoie Cédex(FR)**

(72) Inventeur: **Ouentin, Jean-Pierre**
**35, rue Joliot-Curie**
**F-69005 Lyon(FR)**

(74) Mandataire: **Trolliet, Maurice et al**
**RHONE-POULENC INTERSERVICES Service Brevets Chimie Centre de Recherches des Carrières B.P. 62**
**F-69192 Saint-Fons Cédex(FR)**

**EP 0 272 992 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne un procédé pour l'obtention de copolyesteramides aromatiques thermotropes conformables dérivant d'une part d'au moins une hydroquinone substituée (ou un dérivé), d'autre part d'un mélange de diacides carboxyliques aromatiques (ou leurs dérivés) et enfin d'au moins au aminoacide carboxylique aromatique (ou un dérivé).

On connaît déjà des polyesters thermotropes dérivant d'une part d'un ou plusieurs diphénols et d'autre part d'un ou plusieurs diacides carboxyliques aromatiques et/ou cycloaliphatiques. Des polyesters de ce genre sont divulgués par exemple dans le brevet français 2 270 282 et parmi les polyesters qui y sont décrits, ceux obtenus notamment à partir d'une hydroquinone substituée (ou un dérivé), d'acide téréphtalique (ou un dérivé) et de dicarboxy-4,4' diphényléther (ou un dérivé) sont des espèces présentant un intérêt certain. Pour des raisons d'ordre économique touchant au prix élevé des matières premières, la Demanderesse a cherché à remplacer une partie des réactifs les plus onéreux, à savoir l'hydroquinone substituée (ou son dérivé) et le dicarboxy-4,4' diphényléther (ou son dérivé), par un composé du type aminoacide moins coûteux et facilement disponible industriellement. Par ailleurs, la Demanderesse a cherché à surmonter un inconvénient de ces copolyesters particuliers résidant dans l'obtention de valeurs de propriétés thermo-mécaniques insuffisantes qui demandent à être améliorées, notamment la conservation des valeurs des modules de torsion jusqu'à des températures élevées.

Il a maintenant été trouvé que l'on pouvait arriver à la satisfaction de ces objectifs grâce à l'emploi d'un réactif supplémentaire consistant dans l'acide paraaminobenzoïque ou un dérivé et d'un procédé de polycondensation particulier.

Plus précisément, la présente invention concerne un procédé pour l'obtention de copolyesteramides aromatiques thermotropes conformables ayant une masse moléculaire élevée dont la valeur minimale correspond à une viscosité inhérente de 0,3 $dlg^{-1}$, caractérisé par le fait que l'on fait réagir :

1. - un diester de méthyl - et/ou d'éthyl - et/ou de chloro - et/ou bromohydroquinone en mélange éventuellement avec un (ou des) diester(s) d'un autre (ou d'autres) diphénol(s), avec
2. - éventuellement de l'acide téréphtalique pris seul ou en mélange éventuellement avec un autre diacide carboxylique aromatique et avec
3. - le dicarboxy-4,4' diphényléther, et avec
4. - un dérivé acylé de l'acide paraaminobenzoïque au niveau de la fonction amine, pris seul ou en mélange éventuellement avec un dérivé acylé du même type d'un autre aminoacide aromatique,

ledit diester de diphénol étant formé à partir d'un acide alcanoïque ayant de 2 à 6 atomes de carbone et ledit dérivé acylé d'aminoacide au niveau de la fonction amine étant formé à partir d'un anhydride ou d'un halogénure dérivé d'un acide alcanoïque ayant de 2 à 6 atomes de carbone, les réactifs étant utilisés dans des proportions telles que :

- le rapport molaire diester(s) de diphénol(s)/diacides totaux se situe dans l'intervalle allant de 0,95 à 1,05,
- la quantité d'acide téréphtalique dans le mélange acide téréphtalique + dicarboxy-4,4' diphényléther se situe dans l'intervalle allant de 0 à 70 % en mole,
- la quantité de dérivé acylé d'acide paraaminobenzoïque au niveau de la fonction amine se situe dans l'intervalle allant de 5 à 100 % en mole par rapport à la quantité de diester(s) d'hydroquinone(s) monosubstituée(s),
- la quantité totale des réactifs engagés autres que le (ou les) diester(s) d'hydroquinone(s) monosubstituée(s), l'acide téréphtalique, le dicarboxy-4,4' diphényléther et le dérivé acylé de l'acide paraaminobenzoïque, est -quand il y en a- au plus égale à 10 % en mole par rapport à la quantité de diester(s) d'hydroquinone(s) monosubstituée(s).

La réaction s'effectue en général en présence d'un catalyseur tel que notamment l'acétate de sodium, de magnésium, de manganèse et de zinc, le titanate de butyle, le trioxyde d'antimoine. Elle débute en général à une température supérieure à 250 °C, puis l'acide formé distille. Après avoir recueilli environ 80 % de la théorie d'acide à distiller, on élève progressivement la température jusqu'à une valeur supérieure à 280 °C tout en diminuant progressivement la pression. Lorsque la distillation de l'acide est terminée, la polycondensation est continuée sous un vide important pendant une durée pouvant aller jusqu'à 30 minutes.

Dans ce procédé par acidolyse, les réactifs sont utilisés dans des proportions telles que :

- le rapport molaire diester(s) de diphénol(s)/diacides totaux se situe dans l'intervalle allant de 0,95 à 1,05,
- la quantité d'acide téréphtalique dans le mélange acide téréphtalique + dicarboxy-4,4' diphényléther se situe dans l'intervalle allant de 0 à 70 % en mole, et de préférence allant de 20 à 60 % en mole,

- la quantité de dérivé acylé d'acide paraaminobenzoïque au niveau de la fonction amine se situe dans l'intervalle allant de 5 à 100 % en mole par rapport à la quantité de diester(s) d'hydroquinone(s) monosubstituée(s), et de préférence allant de 10 à 60 % en mole,
- la quantité totale des réactifs engagés autres que le (ou les) diester(s) d'hydroquinone(s) monosubstituée(s), l'acide téréphtalique, le dicarboxy-4,4' diphényléther et le dérivé acylé de l'acide paraaminobenzoïque est au plus égale à 10 % en mole par rapport à la quantité de diester(s) d'hydroquinone(s) monosubstituée(s).

Les copolyesteramides obtenus d'après le procédé selon l'invention présentent généralement des groupes terminaux d'un côté du type alkoxy et/ou acylamino et, de l'autre côté, du type OH acide.

Le procédé selon l'invention permet d'obtenir des copolyesteramides aromatiques thermotropes comportant des unités de récurrence de formules (I), éventuellement (II), (III), (IV) :

(I) désignant la structure :

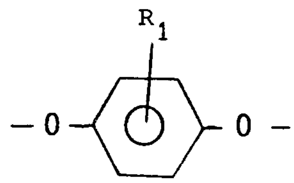

dans laquelle $R_1$ représente un radical méthyle ou éthyle ou un atome de chlore ou de brome, les unités (I) pouvant être identiques ou différentes entre elles,

(II) désignant la structure :

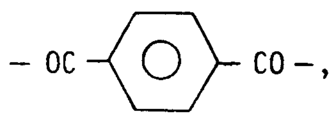

(III) désignant la structure :

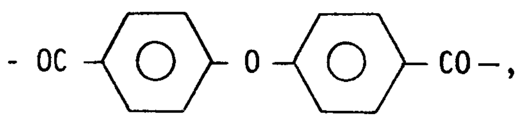

(IV) désignant la structure :

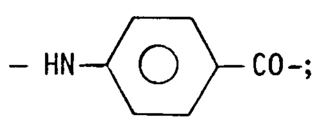

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 70 % en mole et celle des unités (III), par rapport à la même référence, se situe dans l'intervalle allant de 100 à 30 % en mole ;
- la quantité des unités (IV), exprimée par rapport à la quantité des unités (I), se situe dans l'intervalle allant de 5 à 100 % en mole ;
- et ces copolyesteramides possèdent une température d'écoulement se situant dans l'intervalle allant de 200 à 350 °C.

Les unités de formule (I) sont issues d'une hydroquinone monosubstituée (par un radical méthyle ou éthyle ou par un atome de chlore ou de brome) ou de son diester. Il doit être entendu que les unités (I) peuvent être issues également d'un mélange de deux ou de plus de deux hydroquinones monosubstituées

ou de leurs diesters, appartenant au groupe de composés visés dans la présente invention.

Les unités de formule (II) proviennent d'acide téréphtalique ou d'un dérivé comme par exemple un dihalogénure ou un diester.

Les unités de formule (III) proviennent du dicarboxy-4,4' diphényléther ou d'un dérivé comme par exemple un dihalogénure ou un diester.

Les unités de formule (IV) sont issues d'acide paraaminobenzoïque ou d'un dérivé comme par exemple le composé obtenu par acylation de la fonction amine ou le composé obtenu pr estérification de la fonction acide ou un halogénure de la fonction acide.

Selon une modalité préférentielle de mise en oeuvre du procédé selon l'invention, les proportions molaires des réactifs conduisant à des copolyesteramides comportant des unités recurrentes (I), (II), (III) et (IV) sont telles que :

- la quantité des unités (II) dans le mélange (II) + (III) se situe dans l'intervalle allant de 20 à 60 % en mole et celle des unités (III), par rapport à la même référence, va de 80 à 40 % en mole,
- et la quantité des unités (IV), exprimée par rapport à la quantité des unités (I), se situe dans l'intervalle allant de 10 à 60 % en mole.

Le procédé selon l'invention convient tout particulièrement bien à l'obtention de copolyesteramides aromatiques appartenant à ce groupe présentant une structure dans laquelle les unités (I) sont identiques, avec le substituant $R_1$ représentant un radical méthyle ou un atome de chlore. De pareilles unités (I) sont issues de méthylhydroquinone ou de chlorohydroquinone ou de leurs diesters.

A propos de la viscosité inhérente, on précisera qu'elle est mesurée à 25°C sur une solution renfermant 0,5 g de copolyesteramide pour 100 $cm^3$ d'un mélange solvant parachlorophénol/dichloro-1,2 éthane (50/50 en volume). Les copolyesteramides conformes à la présente invention possèdent une viscosité inhérente au moins égale à 0,3 $dlg^{-1}$ ; de préférence, ils possèdent une viscosité inhérente au moins égale à 0,5 $dlg^{-1}$ qui peut se situer plus précisément dans l'intervalle allant de 0,5 à 4,0 $dlg^{-1}$.

A propos de la température d'écoulement, elle se situe plus préférentiellement dans l'intervalle allant de 260 à 330°C. On entend par "température d'écoulement", la température à laquelle les bords d'un échantillon sous forme de copeau de polymère ou de fibre coupée commencent à s'arrondir. Cette température est déterminée par observation visuelle de l'échantillon sur une lamelle couvre-objet pour une vitesse de montée en température appropriée, généralement de l'ordre de 10 à 20°C minutes, observation faite à l'aide d'un microscope équipé d'une platine chauffante connu dans le commerce sous la marque THERMOPAN.

Le procédé selon l'invention permet également d'obtenir des copolyesteramides qui englobent aussi les polymères qui peuvent contenir en outre dans leur structure des unités aromatiques génératrices de fonctions esters et amides (unités dioxy et/ou unités dicarbonyle et/ou unités mixte amino secondaire/carbonyle) ayant une structure autre que celle des unités (I), (II), (III) et (IV), ces unités supplémentaires étant présentes en proportions déterminées de manière à ne pas influencer de façon néfaste la propriété importante des copolyesters de l'invention d'être thermotropes. Une liste non limitative de ces unités supplémentaires est la suivante :

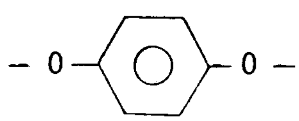

(I')

et/ou 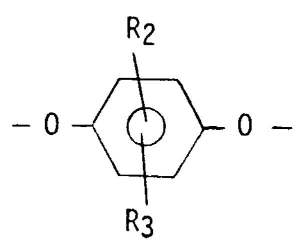

(I") où $R_2$

et $R_3$, qui peuvent être identiques ou différents, ont chacun le définition donnée ci-avant pour $R_1$, les unités (I") pouvant être identiques ou différentes entre elles,

et/ou 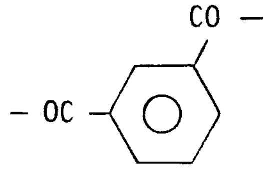 (II')

et/ou 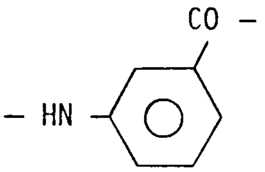 (IV')

Les unités de formule (I') sont issues de l'hydroquinone non substituée ou de son diester.

Les unités de formule (I") sont issues d'une hydroquinone disubstituée ou de son diester ou d'un mélange d'hydroquinones disubstituées ou de leurs diesters.

Les unités de formule (II') sont issues de l'acide isophtalique ou d'un dérivé comme par exemple un dihalogénure ou un diester.

Les unités de formule (IV') sont issues d'acide métaaminobenzoïque ou d'un dérivé.

En général, la quantité totale des unités supplémentaires qui peuvent être présentes et, en particulier, la quantité totale des unités (I') et/ou (I") et/ou (II') et/ou (IV') sera au plus égale à 10 % en mole par rapport à la quantité des unités (I). Bien entendu, les quantités totales de toutes les unités dioxy et de toutes les unités dicarbonyle alors présentes dans le copolyesteramide devront être telles que le rapport molaire de la totalité des unités dioxy par rapport à la somme totale des unités dioxy + totalité des unités dicarbonyle se situe dans l'intervalle allant de 0,95 à 1,05.

Les copolyesteramides obtenus par le procédé selon la présente invention présentent la caractéristique importante d'être themotropes, c'es-à-dire qu'ils sont capables de former des masses fondues anisotropes qui sont faciles à conformer par filage, filmage ou moulage ; la thermotropie est facile à mettre en évidence lorsqu'on observe le polymère à l'état fondu dans un système optique équipé de deux polariseurs croisés (90°) : il se produit pour les échantillons anisotropes une biréfringence et une transmission de la lumière polarisée à travers les polariseurs croisés. La mise en évidence de l'anisotropie des polyesteramides selon la présente invention a été effectuée par la méthode thermo-optique TOT décrite dans le brevet français 2 270 282.

De ce fait, les masses fondues à l'état anisotrope possèdent une orientation propre et un degré relativement élevé d'organisation qui se retrouvent sur les articles conformés tels que les fils, films et objets moulés leur conférant (déjà à l'état brut) des propriétés améliorées telles que module, ténacité, qu'on n'observe pas habituellement sur les produits bruts isotropes.

Il convient de noter que ces masses fondues anisotropes possèdent une plage d'anisotropie étalée sur au moins 30°C. On entend par "plage d'anisotropie", l'intervalle de température qui part de la température à laquelle apparaît la biréfringence et la transmission de la lumière à travers les deux polariseurs croisés et qui se situe au-dessus de ladite température, intervalle ayant une borne supérieure variable et dans lequel la masse fondue est anisotrope sans aucun risque de décomposition du copolyesteramide.

Les copolyesteramides obtenus par le procédé selon la présente invention peuvent être mis en forme au moyen de tout procédé connu tel que moulage, filage, filmage et en opérant bien entendu dans la plage d'anisotropie pour donner les articles ayant un bon niveau de propriété. La présence, dans la structure des copolyesters conformes à la présente invention, des unités mixtes amino secondaires/carbonyle (IV) permet de faire baisser le prix moyen des matières premières et par conséquent de minimiser le coût de production des articles en formes issus de ces copolyesteramides. Par ailleurs, dans le cas par exemple d'articles moulés, on peut noter (par rapport à ce qui se passe en absence de pareilles unités mixtes) une amélioration sensible des valeurs de certaines propriétés mécaniques, notamment les valeurs des modules de torsion et on peut noter en outre une meilleure conservation des propriétés mécaniques en fonction de la température.

Il est possible d'augmenter encore les propriétés mécaniques, notamment celles des articles minces, par traitement thermique à température élevée, inférieure à la température de fusion du polymère.

Suivant l'application qui en sera faite, les copolyesteramides obtenus par le procédé selon l'invention peuvent recevoir des additifs tels que notamment des colorants, des agents de stabilisation contre l'action

de la lumuière, de l'oxygène et de la chaleur, des charges de remplissage ou de renforcement, des agents ignifugeants.

Les exemples non limitatifs qui suivent montrent comment la présente invention peut être mise en oeuvre pratiquement.

Dans ces exemples, un certain nombre de contrôles des copolyesteramides obtenus sont effectués. On indique ci-après les modes opératoires et/ou les normes selon lesquels ces contrôles sont effectués ;

- Module en torsion :

Il est déterminé à différentes températures au pendule automatique de torsion sous une fréquence de l'ordre de 1 Hertz selon norme ISO R 537 méthode B, les éprouvettes étant conditionnées à EN 50 selon la norme NF T 51014. Les résultats sont exprimés en MPa.

- Essai de traction :

La résistance et le module en traction sont mesurés à 23 °C selon les indications de la norme NF T 51034 sur des éprouvettes de type haltère ayant une largeur de 4 mm et une épaisseur de 2 mm, conditionnées à EH 50. Les résultats sont exprimés en MPa.

- Module en flexion :

Cette détermination est faite à 23 °C selon les indications de la norme NF T 51 001 sur des éprouvettes de type barreau de 80 x 8 x 4 mm, conditionnées à EH 50. Les résultats sont exprimés en MPa.

- Résistance au choc CHARPY :

Elle est déterminée à 23 °C selon les indications de la norme NF T 51 035 sur des éprouvettes de type barreau de 60 x 10 x 4 mm comportant des entailles en U, conditionnées à EH 50. Les résultats sont exprimés en $kJ/m^2$.

EXEMPLE 1 :

Dans un réacteur de polycondensation agité et chauffé, muni d'un dispositif de distillation et de balayage par un gaz inerte, on introduit les réactifs et catalyseur suivants :

1. - diacétate de méthylhydroquinone : 62,46 g
   [rapport molaire (1)/(2) + (3) = 1]
2. - acide téréphtalique : 19,92 g
   [40 % en mole dans le mélange (2) + (3)]
3. - dicarboxy-4,4' diphényléther : 46,44 g
   [60 % en mole dans le mélange (2) + (3)]
4. - acide para-acétamidobenzoïque : 21,48 g
   [40 % en mole Par rapport à (1)]
5. - acétate de magnésium : 0,074 g
   [500 ppm].

Le réacteur est purgé a' l'azote, puis chauffé par un bain métallique réglé à 265 °C. L'acide acétique commence à distiller après quelques minutes, la première goutte d'acide qui distille correspondant au temps zéro. Après 17 minutes, on recueille 36 $cm^3$ d'acide acétique (87,5 % de la théorie). On élève ensuite progressivement la température du bain métallique jusqu'à 330 °C en 40 minutes ; dans le même temps, la pression est diminuée de 1 $010.10^2$ Pa à $13{,}3.10^2$ Pa. On poursuit le chauffage à 330 °C pendant 15 minutes en diminuant la pression jusqu'à $0{,}39.10^2$ Pa pendant le même temps. Le volume total d'acide acétique distillé est de 40 $cm^3$ (soit 97,3 % de la théorie).

Le polymère obtenu est blanc et d'aspect fibreux. Il possède une viscosité inhérente de 1,82 $dlg^{-1}$. La température d'écoulement est de 290 °C. La plage d'anisotropie va de 300 °C jusqu'a' plus de 360 °C.

Les valeurs du module de torsion en fonction de la température sont indiquées dans le tableau I suivant.

Les résultats des mesures de traction, de flexion et de choc sont indiquées dans le tableau 2 suivant.

A propos des éprouvettes moulées permettant de mesurer les propriétés mécaniques, elles sont préparées à l'aide d'une presse à vis connue dans le commerce sous la marque KAP. Pour ce faire, le

copolyesteramide obtenu est broyé, puis séché 4 heures à 150 °C et les granulés formés sont moulés par injection dans les conditions suivantes :

- température du fondoir : 320 °C
- température du moule : 50 °C
- pression matière d'injection : 22,5 MPa.

A titre d'essai comparatif (essai A), on a reproduit les mêmes opérations que celles décrites ci-avant mais en n'utilisant pas cette fois d'acide para-acétamidobenzoïque. Les réactifs et catalyseur mis en oeuvre sont donc les suivants :

1. - diacétate de méthylhydroquinone : 52,05 g
   [rapport molaire : (1)/(2) + (3) = 1]
2. - acide téréphtalique : 16,6 g
   [40 % en mole dans mélange (2) + (3)]
3. - dicarboxy-4,4' diphényléther : 38,7 g
   [60 % en mole dans mélange (2) + (3)]
4. - acétate de magnésium : 0,054 g
   [500 ppm].

Dans cet essai, un volume de 27 $cm^3$ d'acide acétique est récupéré (soit 94,4 % de la théorie). Le polymère obtenu est blanc et d'aspect fibreux. Il possède une viscosité inhérente de 1,78 $dlg^{-1}$. La température d'écoulement est de 280 °C. La plage d'anisotropie va de 280 °C jusqu'à plus de 360 °C.

TABLEAU 1

| T °C | | - 40 | 0 | 20 | 60 | 80 | 100 | 120 | 140 | 180 | 200 |
|---|---|---|---|---|---|---|---|---|---|---|---|
| Module de torsion MPa | Ex. 1 | 1700 | 1500 | 1300 | 1000 | 950 | 900 | 800 | 500 | 310 | 290 |
| | Essai A | 1300 | 1100 | 900 | 700 | 600 | 500 | 400 | 200 | 150 | 130 |

Au vu du tableau 1, on constate pour le polymère selon la présente invention une meilleure conservation du module en fonction de la température. Le rapport : module à 20 °C/module à 200 °C est égal à 4,48 pour le polymère de l'exemple 1, alors qu'il est égal à 6,92 pour le polymère de l'essai A. Le module des polymère de l'exemple mesuré à 120 °C est plus élevé que celui du polymère de l'essai A mesuré à 60 °C (800 MPa contre 700 MPa).

EXEMPLE 2 :

Dans le même appareil que celui décrit à l'exemple 1, on introduit :

1. - diacétate de méthylhydroquinone : 62,46 g
   [rapport molaire (1)/(2) + (3) = 1]
2. - acide téréphtalique : 19,92 g
   [40 % en mole dans mélange (2) + (3)]
3. - dicarboxy-4,4' diphényléther : 46,44 g
   [60 % en mole dans mélange (2) + (3)
4. - acide para-acétamidobenzoïque : 10,74 g
   [20 % en mole par rapport à (1)]
5. - acétate de magnésium : 0,0696 g
   [500 ppm].

On opère ensuite comme indiqué à l'exemple 1. Un volume de 37 $cm^3$ d acide acétique est récupéré (98 % de la théorie). Le polymère obtenu est blanc et d'aspect fibreux. Il possède une viscosité inhérente de 2,15 $dlg^{-1}$. La température d'écoulement est de 300 °C. La plage d'anisotropie va de 300 °C jusqu'à plus de 360 °C. Les résultats des mesures de traction, de flexion et de choc sont indiquées dans le tableau 2 suivant.

TABLEAU 2

| EXEMPLE /ESSAI | TRACTION | | FLEXION Module MPa | CHOC CHARPY kJ/m$^2$ |
|---|---|---|---|---|
| | Résistance MPa | Module MPa | | |
| A | 140 | 3 330 | 3 675 | 27 |
| 1 | 135 | 4 580 | 5 610 | 14 |
| 2 | 110 | 4 115 | 4 830 | |

**Revendications**

**1.** Procédé pour l'obention de copolyesteramides aromatiques thermotropes conformables ayant une masse moléculaire élevée dont la valeur minimale correspond à une viscosité inhérente de 0,3 $dlg^{-1}$, caractérisé par le fait que l'on fait réagir :

1. - un diester de méthyl - et/ou d'éthyl - et/ou de chloro - et/ou bromohydroquinone en mélange éventuellement avec un (ou des) diester(s) d'un autre (ou d'autres) diphénol(s), avec
2. - éventuellement de l'acide téréphtalique pris seul ou en mélange éventuellement avec un autre diacide carboxylique aromatique et avec
3. - le dicarboxy-4,4' diphényléther, et avec
4. - un dérivé acylé de l'acide paraaminobenzoïque au niveau de la fonction amine, pris seul ou en mélange éventuellement avec un dérivé acylé du même type d'un autre aminoacide aromatique,

ledit diester de diphénol étant formé à partir d'un acide alcanoïque ayant de 2 à 6 atomes de carbone et ledit dérivé acylé d'aminoacide au niveau de la fonction amine étant formé à partir d'un anhydride ou d'un halogénure dérivé d'un acide alcanoïque ayant de 2 à 6 atomes de carbone, les réactifs étant utilisés dans des proportions telles que :

- le rapport molaire diester(s) de diphénol(s)/diacides totaux se situe dans l'intervalle allant de 0,95 à 1,05,
- la quantité d'acide téréphtalique dans le mélange acide téréphtalique + dicarboxy-4,4' diphényléther se situe dans l'intervalle allant de 0 à 70 % en mole,
- la quantité de dérivé acylé d'acide paraaminobenzoïque au niveau de la fonction amine se situe dans l'intervalle allant de 5 à 100 % en mole par rapport à la quantité de diester(s) d'hydroquinone(s) monosubstituée(s),
- la quantité totale des réactifs engagés autres que le (ou les) diester(s) d'hydroquinone(s) monosubstituée(s), l'acide téréphtalique, le dicarboxy-4,4' diphényléther et le dérivé acylé de l'acide paraaminobenzoïque, est -quand il y en a- au plus égale à 10 % en mole par rapport à la quantité de diester(s) d'hydroquinone(s) monosubstituée(s).

**2.** Procédé selon la revendication 1, caractérisé en ce que :

- la quantité d'acide téréphtalique dans le mélange acide téréphtalique + dicarboxy-4,4' diphényléther se situe dans l'intervalle allant de 20 à 60 % en mole, et
- la quantité de dérivé acylé d'acide paraaminobenzoïque au niveau de la fonction amine se situe dans l'intervalle allant de 10 à 60 % en mole par rapport à la quantité de diester(s) d'hydroquinone(s) monosubstituée(s).

**3.** Procédé selon la revendication 1 ou 2, caractérisé en ce que l'on utilise :

- au point 1., comme autre(s) diphénol(s), de l'hydroquinone non substituée et/ou une ou plusieurs hydroquinone(s) disubstituée(s) par les groupes méthyle et/ou éthyle et/ou chloro et/ou bromo,
- au point 2., comme autre diacide carboxylique aromatique, l'acide isophtalique,
- au point 4., comme autre aminoacide aromatique, l'acide métaaminobenzoïque.

**4.** Procédé selon les revendications 1 à 3 comprenant l'étape supplémentaire de transformation des produits obtenus en article conformé.

**5.** Procédé selon la revendication 4 dans lequel l'article conformé est un objet moulé, une fibre ou un film.

## Claims

**1.** Process for the production of thermotropic aromatic copolyesteramides which can be shaped, having a high molecular mass, the minimum value of which corresponds to an inherent viscosity of 0.3 dl $g^{-1}$, characterised in that:

1. - a methyl- and/or ethyl- and/or chloro- and/or bromohydroquinone diester, optionally mixed with one (or more) diester(s) of another (or other) diphenol(s) is reacted with
2. - optionally terephthalic acid taken alone or optionally mixed with another aromatic carboxylic diacid and with
3. - 4,4'-dicarboxydiphenyl ether, and with
4. - a derivative of para-aminobenzoic acid acylated at the amine functional group, taken alone or optionally mixed with another acylated derivative of the same type of another aromatic amino acid,

the said diphenol diester being formed from an alkanoic acid containing from 2 to 6 carbon atoms and the said amino acid derivative acylated at the amine functional group being formed from an anhydride or a halide derived from an alkanoic acid containing from 2 to 6 carbon atoms, the reactants being employed in proportions such that

- the molar ratio diphenol diester(s) : total diacids is within the range from 0.95 to 1.05,
- the quantity of terephthalic acid in the terephthalic acid + 4,4'-dicarboxydiphenyl ether mixture is within the range from 0 to 70 mol%,
- the quantity of the derivative of para-aminobenzoic acid acylated at the amine group is within the range from 5 to 100 mol% relative to the quantity of monosubstituted hydroquinone diester(s), and
- the total quantity of reactants employed other than the monosubstituted hydroquinone diester(s), terephthalic acid, 4,4'-dicarboxydiphenyl ether and the acylated derivative of para-aminobenzoic acid is - where this exists - at most equal to 10 mol% relative to the quantity of monosubstituted hydroquinone diester(s).

**2.** Process according to Claim 1, characterised in that:

- the quantity of terephthalic acid in the terephthalic acid + 4,4'-dicarboxydiphenyl ether mixture is within the range from 20 to 60 mol%, and
- the quantity of the derivative of para-aminobenzoic acid acylated at the amine group is within the range from 10 to 60 mol% relative to the quantity of monosubstituted hydroquinone diester(s).

**3.** Process according to Claim 1 or 2, characterised in that the following are employed:

- at point 1., as other diphenol(s), unsubstituted hydroquinone and/or one or more hydroquinone(s) disubstituted by methyl and/or ethyl and/or chloro and/or bromo groups,
- at point 2., as other aromatic carboxylic diacid, isophthalic acid, and
- at point 4., as other aromatic amino acid, metaaminobenzoic acid.

**4.** Process according to Claims 1 to 3, comprising the additional stage of converting the products obtained into shaped articles.

**5.** Process according to Claim 4, in which the shaped article is a moulded object, a fibre or a film.

## Patentansprüche

**1.** Verfahren zur Herstellung von verformbaren thermotropen aromatischen Copolyesteramiden mit einer erhöhten Molekularmasse, deren Minimalwert einer Eigenviskosität von 0,3 $dlg^{-1}$ entspricht, dadurch gekennzeichnet, daß man reagieren läßt:

1. einen Methyl- und/oder Ethyl-, und/oder Chlor- und/oder Bromhydrochinondiester, gegebenenfalls im Gemisch mit einem Diester (oder Diestern) eines anderen (oder anderer) Diphenols(en) mit
2. gegebenenfalls Terephthalsäure allein genommen oder gegebenenfalls im Gemisch mit einer anderen aromatischen Dicarbonsäure und mit
3. 4,4'-Dicarboxydiphenylether und mit
4. einem Acylderivat der Paraaminobenzoesäure auf dem Niveau der Aminfunktion allein genommen oder gegebenenfalls im Gemisch mit einem Acylderivat des gleichen Typs einer anderen aromatischen Aminosäure,

wobei der Diphenoldiester gebildet ist ausgehend von einer Alkansäure mit 2 bis 6 Kohlenstoffatomen und das genannte Acylderivat der Aminosäure auf dem Niveau der Aminfunktion aus einem Anhydrid oder einem Halogenid stammend von einer Alkansäure mit 2 bis 6 Kohlenstoffatomen gebildet ist, und die Reaktanten in solchen Mengenverhältnissen angewandt werden, daß:

- das Molverhältnis des/der Diphenoldiester(s) / gesamte Disäuren in dem Bereich von 0,95 bis 1,05 liegt,
- die Menge an Terephthalsäure in dem Gemisch Terephthalsäure + 4,4'-Dicarboxydiphenylether in dem Bereich von 0 bis 70 Molprozent liegt,
- die Menge an Acylderivat der Paraaminobenzoesäure auf dem Niveau der Aminfunktion in dem Bereich von 5 bis 100 Molprozent liegt in bezug auf die Menge an monosubstituiertem(n) Hydrochinondiester(n),
- die Gesamtmenge der eingesetzten Reaktanten anders als der/die monosubstituierte(n) Hydrochinondiester, Terephthalsäure, 4,4'-Dicarboxydiphenylether und dem Acylderivat der Paraaminobenzoesäure ist - falls vorhanden - höchstens gleich 10 Molprozent in bezug auf die Menge an monosubstituiertem(n) Hydrochinondiester(n).

**2.** Verfahren gemäß Anspruch 1, dadurch gekennzeichnet, daß:

- die Menge an Terephthalsäure in dem Gemisch Terephthalsäure + 4,4'-Dicarboxydiphenylether in dem Bereich von 20 bis 60 Molprozent liegt, und
- die Menge an Acylderivat der Paraaminobenzoesäure in Höhe der Aminfunktion in dem Bereich von 10 bis 60 Molprozent in bezug auf die Menge an monosubstituiertem(n) Hydrochinondiester(n) liegt.

**3.** Verfahren gemäß Anspruch 1 oder 2, dadurch gekennzeichnet, daß man verwendet:

- zu Punkt 1., als anderes Diphenol (andere Diphenole) nicht substituiertes Hydrochinon und/oder ein oder mehrere Hydrochinon(e), disubstituiert durch die Gruppen Methyl und/oder Ethyl und/oder Chlor und/oder Brom,
- zu Punkt 2., als andere aromatische Dicarbonsäure die Isophthalsäure,
- zu Punkt 4., als andere aromatische Aminosäure die Metaaminobenzoesäure.

**4.** Verfahren gemäß den Ansprüchen 1 bis 3, umfassend die zusätzliche Umformungsstufe der erhaltenen Produkte zu einem geformten Erzeugnis.

**5.** Verfahren gemäß Anspruch 4, dadurch gekennzeichnet, daß das geformte Erzeugnis ein geformter Gegenstand, eine Faser oder ein Film ist.